# EUROPEAN PATENT SPECIFICATION

(11) **EP 3 961 073 B1**
(45) Date of publication and mention of the grant of the patent: **24.04.2024**
(21) Application number: 19926601.6
(22) Date of filing: 18.12.2019
(51) Int. Cl.: F16K 5/02, F16K 5/08, F16K 11/083, F24C 3/12, F23K 5/00

(54) **GAS VALVE AND GAS APPLIANCE**
GASVENTIL UND GASGERÄT
VANNE DE GAZ ET APPAREIL À GAZ

(30) Priority: 22.04.2019 CN 201910325165
(43) Date of publication of application: 02.03.2022
(73) Proprietor: Foshan Shunde Midea Washing Appliances Manufacturing Co., Ltd., Foshan, Guangdong 528300 (CN)
(72) Inventor: LIU, Xiaowen, Foshan, Guangdong 528300 (CN); SUN, Mingxue, Foshan, Guangdong 528300 (CN); ZHANG, Bingwei, Foshan, Guangdong 528300 (CN)
(74) Representative: Whitlock, Holly Elizabeth Ann
(86) International application number: PCT/CN2019/126233
(87) International publication number: WO 2020/215757

(56) References cited:
- CN-A- 109 630 688
- CN-A- 109 973 675
- CN-U- 203 670 858
- CN-U- 206 268 507
- CN-U- 206 496 023
- CN-U- 206 803 238
- CN-U- 207 554 855
- KR-A- 20180 020 474
- US-A1- 2013 260 327

## Description

### FIELD

This application relates to the field of gas appliances and, more particularly, to a gas valve and a gas appliance.

### BACKGROUND

Gas valves are crucial control components of gas appliances and used to open or close gas pipelines or realize the adjustment of gas intake volume. Existing standards require that there must be two sealing structures in the gas appliances. In a combined valve structure of a proportional valve and a stop valve, a gas outlet of the proportional valve is directly coupled to an inner-ring gas channel or an outer-ring gas channel of the gas appliance in the related art, which causes the presence of only one sealing structure in this path, and in order to satisfy the standards, a stop valve needs to be arranged in a primary gas inlet pipe, which increases the number of parts of the gas valve of the gas appliance, leads to high production costs and poor reliability of the gas valve, and increases the number of sealing ports in the whole machine and thus the potential risk of gas leakage. In addition, the presence of the stop valve in the primary gas inlet pipe makes the primary gas inlet pipe longer and also increases the cost. CN109630688 relates to a gas valve comprising a proportional valve with a proportional valve inlet and proportional valve outlet, and a plug valve with a plug valve inlet and three plug valve outlets, the proportional valve outlet in direct communication with the plug valve inlet.

### SUMMARY

Aspects of the invention are provided in the claims. In order to solve at least one of the problems in the related art, the present disclosure proposes a gas valve and a gas appliance using the gas valve.

Embodiments of an aspect of the present disclosure provide a gas valve. The gas valve includes: a plug valve, having a first plug valve gas inlet, a second plug valve gas inlet, a plug valve connection port, and at least one plug valve gas outlet, and configured to assume a closed position where the first plug valve gas inlet is obstructed from the plug valve connection port, a first open position where the first plug valve gas inlet is in communication with the plug valve connection port, and a second open position where the second plug valve gas inlet is in communication with the at least one plug valve gas outlet; and a proportional valve, having a proportional valve gas inlet, a first proportional valve gas outlet, and a second proportional valve gas outlet, and configured to assume a closed position where the proportional valve gas inlet is obstructed from the first proportional valve gas outlet and the second proportional valve gas outlet, and an open position where the proportional valve gas inlet is in communication with the first proportional valve gas outlet and the second proportional valve gas outlet. The plug valve connection port is only in direct communication with the proportional valve gas inlet, and the second proportional valve gas outlet is only in direct communication with the second plug valve gas inlet.

In some embodiments of the present disclosure, the proportional valve and the plug valve have an integrally formed valve body, and the plug valve connection port and the proportional valve gas inlet form an integrally formed connection hole in the valve body.

In some embodiments of the present disclosure, the second proportional valve gas outlet and the second plug valve gas inlet form an integrally arranged connection cavity within the valve body, and the first proportional valve gas outlet is in communication with the connection cavity.

In some embodiments of the present disclosure, the gas valve includes the valve body and a plug valve core assembly. The valve body includes an accommodation cavity in communication with the first plug valve gas inlet, the connection hole, the connection cavity, and the plug valve gas outlet. The plug valve core assembly includes: a plug valve core component including a plug valve core rotatably arranged in the accommodation cavity; and a plug valve drive component. The plug valve core includes: a gas inlet hole arranged corresponding to the first plug valve gas inlet and the connection hole; a gas inlet passage in communication with the connection cavity; and at least one group of gas outlet holes arranged corresponding to the at least one plug valve gas outlet. The plug valve core component is configured to assume a closed position where the first plug valve gas inlet is obstructed from the connection hole, a first open position where the first plug valve gas inlet is in communication with the connection hole through the gas inlet hole, and a second open position where the first plug valve gas inlet is in communication with the connection hole through the gas inlet hole and the gas inlet passage is in communication with a corresponding one of the at least one plug valve gas outlet through the at least one group of gas outlet holes. The plug valve drive component is configured to drive the plug valve core component to rotate among the closed position, the first open position, and the second open position.

In some embodiments of the present disclosure, the plug valve core and the accommodation cavity have inverted truncated conical shapes that match each other, and the plug valve core in the inverted truncated conical shape is hollow to form the gas inlet passage.

In some embodiments of the present disclosure, the plug valve core has two groups of gas outlets, each group of gas outlets includes at least one gas outlet, and the two groups of gas outlets are on a common circumference or different circumferences of a side wall of the inverted truncated cone.

In some embodiments of the present disclosure, the plug valve drive component includes a stepper motor transmissively coupled to the plug valve core.

In some embodiments of the present disclosure, a partial hole section of the gas inlet hole overlaps with the gas outlet holes in an axial direction of the plug valve core; a hole diameter of the partial hole section is smaller than a hole diameter of the remaining hole section of the gas inlet hole, and a center of the partial hole section and a center of the remaining hole section are on a common circumference of a side wall of the plug valve core.

In some embodiments of the present disclosure, the hole diameter gradually increases from the partial hole section to the remaining hole section.

Embodiments of another aspect of the present disclosure provide a gas appliance including a burner and the above gas valve. The burner includes an inner-ring gas channel and an outer-ring gas channel. There is one plug valve gas outlet, and correspondingly one group of gas outlet holes is arranged on the plug valve core; the plug valve gas outlet is in communication with the outer-ring gas channel, and the first proportional valve gas outlet is in communication with the inner-ring gas channel.

Embodiments of another aspect of the present disclosure provide a gas appliance including a burner and the above gas valve. The burner includes an inner-ring gas channel, a middle-ring gas channel, and an outer-ring gas channel. There are two plug valve gas outlets, and correspondingly two groups of the gas outlet holes are arranged on the plug valve core; one of the two plug valve gas outlets is in communication with the middle-ring gas channel, and the other of the two plug valve gas outlets is in communication with the outer-ring gas channel; the first proportional valve gas outlet is in communication with the inner-ring gas channel.

Additional aspects and advantages of the present disclosure will become apparent in part from the following descriptions, or be learned from the practice of the embodiments of the present disclosure.

### BRIEF DESCRIPTION OF THE DRAWINGS

Various advantages and benefits of the present disclosure will become apparent and more readily appreciated for those skilled in the art from the following detailed description of preferred embodiments. The accompanying drawings are merely used to illustrate the preferred embodiments rather than limit the present disclosure. Moreover, the same or similar elements are denoted by like reference numerals throughout the drawings, in which:
FIG. 1 is a top view of a gas valve of an embodiment of the present disclosure;
FIG. 2 is a sectional view taken along A-A direction in FIG. 1 of the present disclosure;
FIG. 3 is a sectional view taken along B-B direction in FIG. 2 of the present disclosure;
FIG. 4 is a sectional view taken along C-C direction in FIG. 2 of the present disclosure;
FIG. 5 is a sectional view taken along D-D direction in FIG. 1 of the present disclosure;
FIG. 6 is a sectional view taken along E-E direction in FIG. 1 of the present disclosure;
FIG. 7 is a rear view of a gas valve of an embodiment of the present disclosure;
FIG. 8 is a perspective view of a plug valve core of a gas valve of an embodiment of the present disclosure;
FIG. 9a is a front view of the plug valve core shown in FIG. 8, FIG. 9b is a sectional view taken along A-A direction in FIG. 9a, and FIG. 9c is a sectional view taken along B-B direction in FIG. 9a;
FIG. 10a is a top view of the plug valve core shown in FIG. 8, and FIG. 10b is a sectional view taken along C-C direction in FIG. 10a;
FIG. 11 is a left view of the plug valve core shown in FIG. 8;
FIG. 12a is a front view of a plug valve core of another embodiment of the present disclosure, FIG. 12b is a side view of the plug valve core of another embodiment of the present disclosure;
FIG. 13 is a top view of a gas valve of another embodiment of the present disclosure;
FIG. 14 is a schematic view illustrating connection between a gas valve of an embodiment of the present disclosure and a burner head.

### DETAILED DESCRIPTION OF THE EMBODIMENTS

Embodiments of the present disclosure will be described in detail below with reference to the drawings. Although exemplary embodiments are illustrated in the drawings, it should be understood that the present disclosure can be implemented in various forms rather than be limited by the embodiments group forth herein. Rather, these embodiments are provided to enable a more thorough understanding of the present disclosure and to reflect the scope of the present disclosure to those skilled in the art.

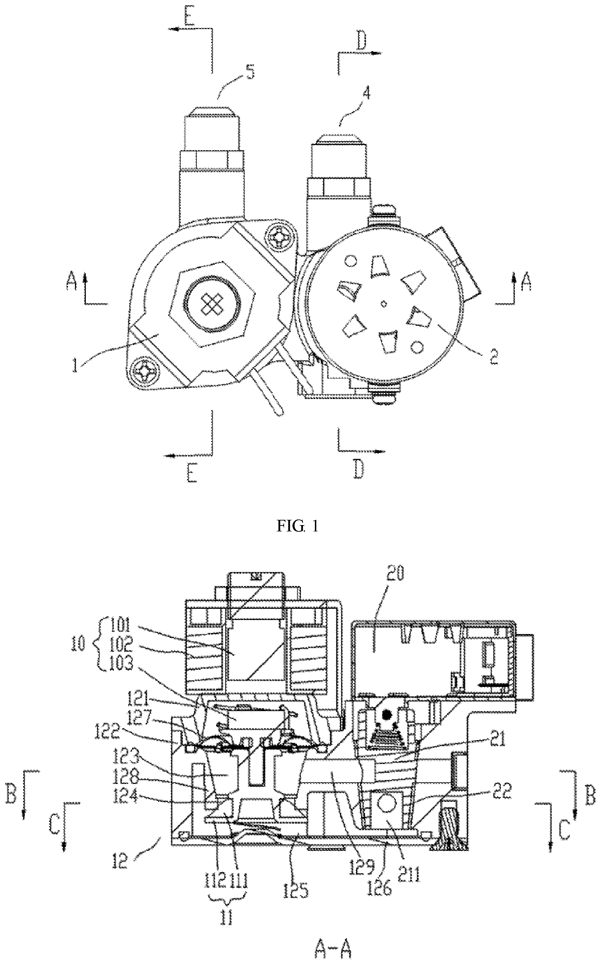

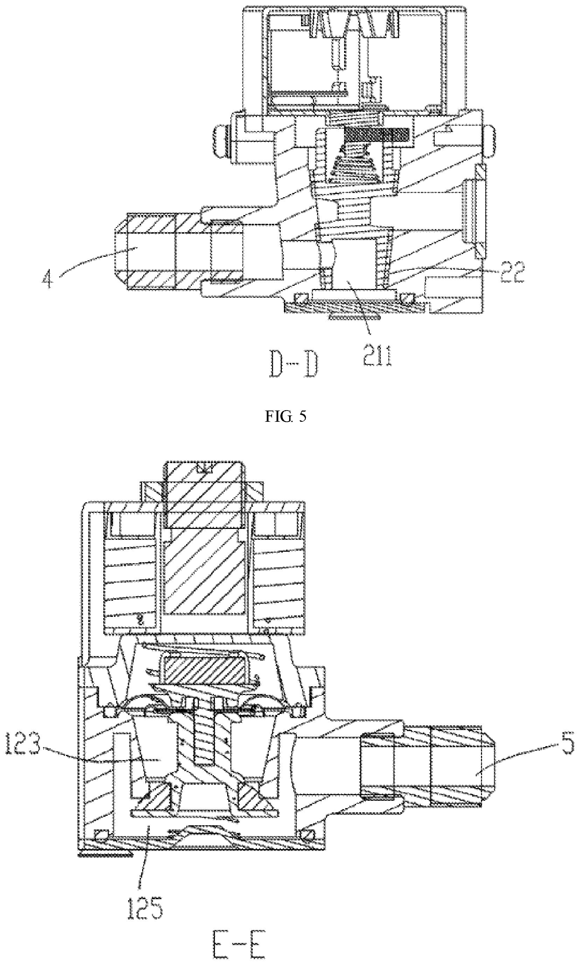

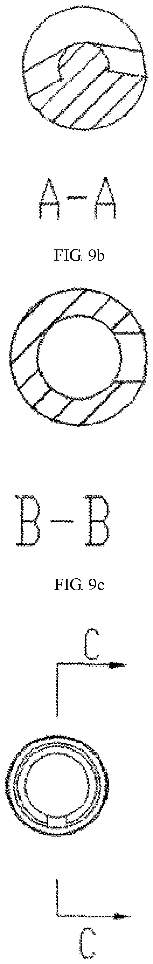

A gas valve according to embodiments of the present disclosure and a gas appliance using the gas valve will be described with reference to FIGS. 1-14.

Embodiments of an aspect of the present disclosure provide a gas valve as shown in FIGS. 1-7. The gas valve includes: a plug valve having a first plug valve gas inlet 3, a second plug valve gas inlet, a plug valve connection port, and at least one plug valve gas outlet 4, and configured to assume a closed position where the first plug valve gas inlet 3 is obstructed from the plug valve connection port, a first open position where the first plug valve gas inlet 3 is in communication with the plug valve connection port, and a second open position where the second plug valve gas inlet is in communication with at least one plug valve gas outlet 4; and a proportional valve having a proportional valve gas inlet, a first proportional valve gas outlet 5, and a second proportional valve gas outlet, and configured to assume a closed position where the proportional valve gas inlet is obstructed from the first proportional valve gas outlet 5 the second proportional valve gas outlet, and an open position where the proportional valve gas inlet is in communication with the first proportional valve gas outlet 5 and the second proportional valve gas outlet.

The plug valve connection port is only in direct communication with the proportional valve gas inlet, and the second proportional valve gas outlet is only in direct communication with the second plug valve gas inlet.

With the combined use of the proportional valve and the plug valve in embodiments of the present disclosure, the gas enters the gas valve through the first plug valve gas inlet 3 and flows out from the gas valve through the plug valve gas outlet 4 and the first proportional valve gas outlet 5, such that two sealing structures can be realized and the standard requirements can be satisfied, eliminating the need for a stop valve in a primary gas inlet pipe of a gas appliance, reducing the number of parts of the gas valve and the number of sealing ports of the whole machine, improving reliability, and lowering costs.

In some embodiments of the present disclosure, as shown in FIG. 2, the proportional valve and the plug valve have an integrally formed valve body 12, and the plug valve connection port and the proportional valve gas inlet form an integrally formed connection hole 129 in the valve body 12. The integral arrangement of the proportional valve and the plug valve in embodiments of the present disclosure further reduces the number of parts of the gas valve and the number of sealing ports of the whole machine, improves reliability, and lowers costs. The communication or obstruction of the connection hole 129 and the first plug valve gas inlet 3 can be controlled by the plug valve, realizing an on/off function that controls whether the gas enters the gas valve or not.

In some embodiments of the present disclosure, as shown in FIG. 2, the second proportional valve gas outlet and the second plug valve gas inlet form an integrally arranged connection cavity 125 within the valve body 12, and the first proportional valve gas outlet 5 is in communication with the connection cavity 125, which can further reduce the number of parts of the gas valve and the number of sealing ports of the whole machine, improve reliability, and lower costs. In one embodiment, the first proportional valve gas outlet 5 may be in communication with an inner-ring gas channel of a burner to achieve control over inner-ring flame of the burner. The proportional valve can control a flow rate of gas entering the first proportional valve gas outlet 5 from the connection cavity 125, to realize the control over the flame size.

In some embodiments of the present disclosure, as shown in FIGS. 1-7, the gas valve includes: the valve body 12 that further includes an accommodation cavity 22 in communication with the first plug valve gas inlet 3, the connection hole 129, the connection cavity 125, and the plug valve gas outlet 4; and a plug valve core assembly 2 including a plug valve core component and a plug valve drive component. The plug valve core component includes a plug valve core 21 rotatably disposed in the accommodation cavity 22. The plug valve core 21 includes: a gas inlet hole 213 arranged corresponding to the first plug valve gas inlet 3 and the connection hole 129; a gas inlet passage 211 in communication with the connection cavity 125; and at least one group of gas outlet holes 212 arranged corresponding to the at least one plug valve gas outlet 4. The plug valve core component is configured with a closed position where the first plug valve gas inlet 3 is obstructed from the connection hole 129, a first open position where the first plug valve gas inlet 3 is in communication with the connection hole 129 through the gas inlet hole 213, and a second open position where the first plug valve gas inlet 3 is in communication with the connection hole 129 through the gas inlet hole 213 and the gas inlet passage 211 is in communication with the corresponding at least one plug valve gas outlet 4 through at least one group of the gas outlet holes 212. The plug valve drive component is configured to drive the plug valve core component to rotate among the closed position, the first open position, and the second open position.

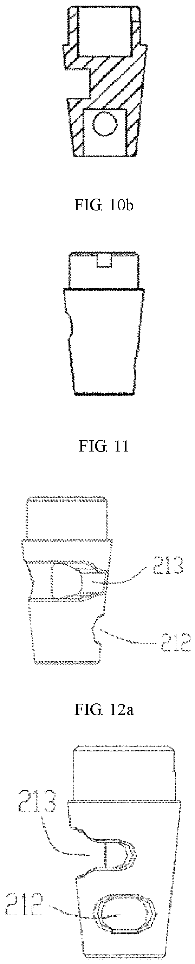

As shown in FIGS. 12a and 12b, a partial hole section of the gas inlet hole 213 overlaps with the gas outlet hole 212 in an axial direction of the plug valve core 21; a hole diameter of the partial hole section is smaller than a hole diameter of the remaining hole section of the gas inlet hole 213; a center of the partial hole section and a center of the remaining hole section are located on a same circumference of a side wall of the plug valve core 21.

It can be seen from the above that the gas inlet hole 213 and the gas outlet hole 212 of the plug valve core 21 have an overlapping hole section in a peripheral direction, but this section of the gas inlet hole 213 has a reduced diameter in a position corresponding to the gas outlet hole 212. Therefore, the position of the overlapping hole section can increase a distance between this section of the gas inlet hole 213 and the gas outlet hole 212, i.e., increase a length of a sealing surface between the gas inlet hole 213 and the gas outlet hole 212, which makes the structure more reliable, and avoid mixing between inflow gas and outflow gas. A person skilled in the art may determine the hole diameter and distance based on requirements, which will not be elaborated and limited here.

At the same time, the hole diameter gradually increases from the partial hole section to the remaining hole section, and a transition section between the partial hole section and the remaining hole section adopts a structure form of a gradually varied hole. Certainly, in addition to the gradually varied hole, the transition section may adopt a stepped form or other transition structures, which will not be limited here.

In some embodiments of the present disclosure, as shown in FIGS. 1-7, the gas valve includes: the valve body 12 further including a proportional valve gas inlet cavity 123 in communication with the connection hole 129 and an outlet valve orifice 124 communicating the proportional valve gas inlet cavity 123 with the connection cavity 125; and a proportional valve core assembly 1 including a proportional valve core component 11 and a proportional valve drive component 10. The proportional valve core component 11 has a closed position for closing the outlet valve orifice 124 and an open position for opening the outlet valve orifice 124. The proportional valve drive component 10 drives the proportional valve core component 11 to move between the closed position and the open position.

Since the gas valve contains two sealing structures formed by the proportional valve with the valve body and by the plug valve with the valve body and meets the standard requirements, there is no need to arrange any stop valve in the primary gas inlet pipe, significantly reducing the number of parts of the gas valve used in the gas appliance, saving costs and improving reliability; in addition, the number of sealing ports of the entire appliance is also reduced, reducing the potential risk of gas leakage. Further, in this embodiment, the gas valve is connected in series to a gas pipe, and the gas flows through the gas valve before reaching the gas appliance, and the gas valve controls on-off of the gas pipe and the amount of gas intake. When flowing through the gas valve, the gas first enters the plug valve, and the plug valve can control the passage of gas by controlling a rotation position of the plug valve core 21. That is, in the closed position of the plug valve core, the first plug valve gas inlet 3 is not in communication with the connection hole 129; and in the first open position, the first plug valve gas inlet 3 is communication with the connection hole 129. After the gas enters the proportional valve gas inlet cavity 123 of the proportional valve core component 1 through the connection hole 129, the passage of the gas is controlled by controlling the opening and closing of the outlet valve orifice 124 in such a way that the proportional valve core component 11 is controlled to approach or get away from the outlet valve orifice 124; and the amount of the gas intake is controlled by controlling a size of a gap between the proportional valve core component 11 and the outlet valve orifice 124. The gas enters the connection cavity 125 from the proportional valve gas inlet cavity 123 through the outlet valve orifice 124, and since the first proportional valve gas outlet 5 is in communication with the connection cavity 125, the gas can flow out of the gas valve through the first proportional valve gas outlet 5. The gas entering the connection cavity 125 enters a gas outlet passage 211 of the plug valve 21. In the second open position of the plug valve, the first plug valve gas inlet 3 is still in communication with the connection hole 129 through the gas inlet hole 213, and the gas inlet passage 211 is in communication with the corresponding plug valve gas outlet 4 through at least one group of the gas outlet holes 212. The amount of the gas intake can be controlled by controlling a size of an overlapping area of the gas outlet holes 212 of the plug valve core 21 and the plug valve gas outlet 4, thus achieving dual control over the amount of the gas intake and precise control over the overall gas intake within a wider adjustment range. When the gas valve is used in the gas appliance, primary precise temperature control is realized by the proportional valve, and then secondary adjustment is realized by the plug valve, so that the plug valve and the proportional valve can jointly control the passage of the gas and the amount of the gas intake to achieve double precise temperature control. Additionally, the structural restrictions of the existing proportional valves, in which the inner and outer rings cannot be adjusted separately but be both turned up or turned down simultaneously, and only the outer ring can be automatically turned on and turned off, and the inner-ring cannot work independently, can be avoided, improving the problem of limited usage scenarios.

The plug valve core may be configured in any suitable shape according to actual needs, such as a truncated conical shape, a cylindrical shape, etc. In another embodiment of the present disclosure, as shown in FIGS. 2, 8-11, the plug valve core 21 and the accommodation cavity 22 have inverted truncated conical shapes that match each other, and the plug valve core 21 in the inverted truncated conical shape is hollow to form the gas inlet passage 211. In such a way, a side surface of the accommodation cavity 22 is fitted with an outer peripheral surface of the plug valve core 21 by a wedged surface, and the sealing between the plug valve core 21 and the accommodation cavity 22 is better, minimizing the risk of gas leakage. In addition, the plug valve core component may be provided with a spring for compressing the plug valve core 21 to ensure the sealing of the plug valve core 21 and the accommodation cavity 22.

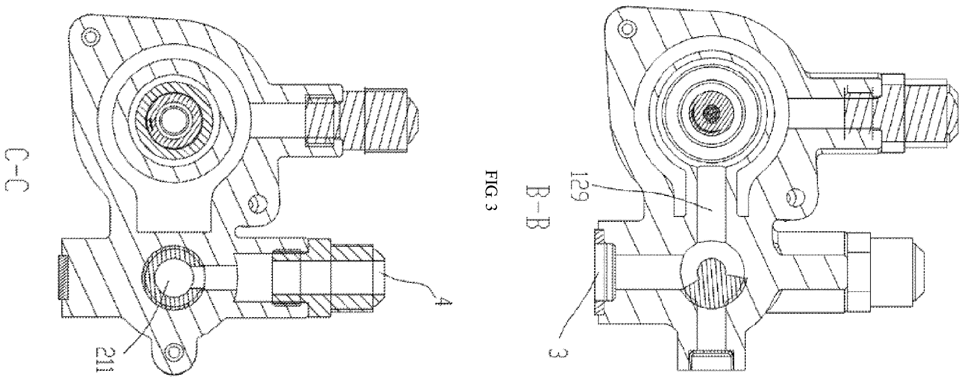

In one embodiment of the present disclosure, as shown in FIGS. 1 and 4, the valve body of the present disclosure has the plug valve gas outlet 4 in communication with the accommodation cavity 22, and the plug valve gas outlet 4 may be in communication with the gas channel of the burner, for example to the outer-ring gas channel of the burner, allowing individual control over the passage of gas and the amount of gas intake in the outer-ring gas channel. Correspondingly, in one embodiment, the plug valve core 21 may be provided with one group of gas outlet holes, the group of gas outlet holes includes at least one gas outlet hole, and the gas outlet holes are located on a common circumference of a side wall of the inverted truncated cone.

In another embodiment of the present disclosure, the valve body of the present disclosure has two plug valve gas outlets in communication with the accommodation cavity 22, and the two plug valve gas outlets may be in communication with different gas channels of the burner respectively, which can realize separate control over the passage of the gas and the amount of the gas intake in different gas channels.

In another embodiment of the present disclosure, the plug valve core 21 may have two groups of gas outlets, each group of gas outlets including at least one gas outlet, and the two groups of gas outlets being located on the same or different circumferences of the side wall of the inverted truncated cone. It can be understood that one group of gas outlet holes is arranged corresponding to one plug valve gas outlet, and the gas outlet holes in the same group may be located on the same circumference or different circumferences. Preferably, in one embodiment, the two groups of gas outlets are located on different circumferences, and the gas outlets in the same group are located on the same circumference. Since the two groups of gas outlets are located on different circumferences, and the plug valve gas outlets corresponding to the two groups of gas outlets are also located on different circumferences, the two groups of gas outlets will not interfere with each other, and can separately and individually control the passage of the gas or the amount of the gas intake.

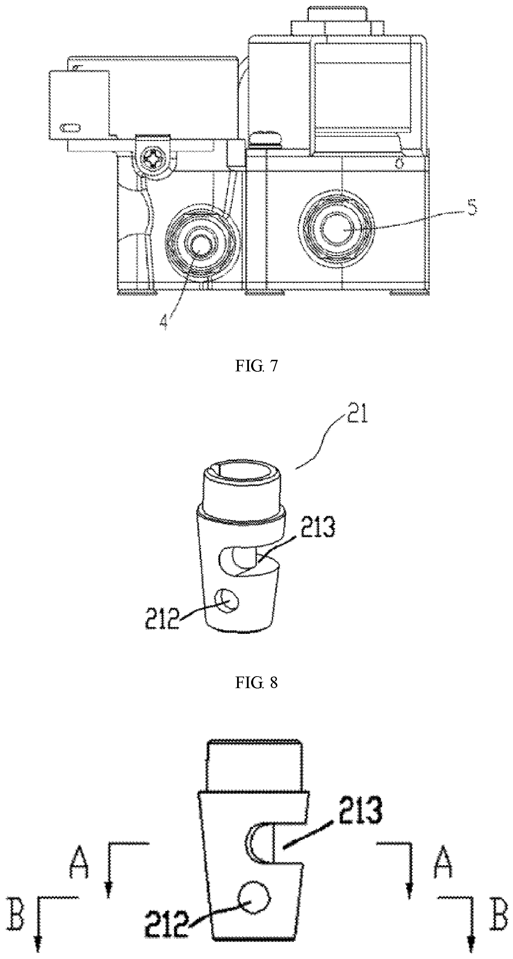

Further, the plug valve used in the related art requires a shaped hole in the valve core to achieve linear adjustment, for example, an involute hole, which increases the processing difficulty and costs. In the gas valve according to embodiments of the present disclosure, since the proportional valve core component can already achieve precise adjustment of the gas intake, when the plug valve core component performs further adjustment in one embodiment, it is only necessary to arrange a conventional gas outlet hole on the plug valve core. In one embodiment, as shown in FIGS. 8-11, the gas outlet holes 212 are circular holes arranged along a circumferential direction of an outer side wall of the inverted truncated cone, and the gas inlet hole 213 is a long sink hole along the circumferential direction of the outer side wall of the inverted truncated cone, and the gas outlet hole 212 is in communication with the gas outlet channel 211, and the gas inlet hole is not in communication with the gas outlet channel 211.

In another embodiment of the present disclosure, the plug valve drive component may be electrically driven and manually driven. The electric drive may be, for example, an electric motor drive, and the electric motor includes a stepper motor, a servo motor, and the like. In another preferred embodiment, the plug valve drive component includes a stepper motor 20 transmissively coupled to the plug valve core 21 as shown. The stepper motor enables precise control over the rotation position of the plug valve core. In addition, both the proportional valve drive component and the plug valve drive component can receive control signals, and cooperate to realize the control over the passage of the gas or the amount of the gas intake, which significantly improves the control accuracy of the gas intake.

In another embodiment of the present disclosure, as shown in FIG. 2, the valve body 12 according to the present disclosure also includes an upper cover 121, a main body 122, and a lower cover 126. The upper cover 121 covers an upper opening of the main body 122; a mounting tube 128 is formed by extending downward from an edge of the upper opening; and a lower opening of the mounting tube 128 forms the outlet valve orifice 124. The proportional valve core component 11 is accommodated in the valve body 12, and includes a proportional valve core 112 and a seal member 111 fitted over the proportional valve core. At least a part of the proportional valve core component 11 is disposed on an inner side of the mounting tube 128, and the seal member 111 abuts against the outlet valve orifice 124 of the mounting tube 128 when the proportional valve core component 11 is in the closed position. The lower cover 126 realizes sealing of the lower opening of the main body 122 and forms the connection cavity 125.

In an embodiment of the present disclosure, as shown in FIG. 2, the proportional valve core component 1 of the gas valve further includes a diaphragm 127 that is an approximately annular structure having an inner end and an outer peripheral edge. The outer peripheral edge of the diaphragm is fixed to the valve body 12, and the inner end of the diaphragm is fixed to the proportional valve core 112. Specifically, as shown, the outer peripheral edge of the diaphragm 127 is fixed to the main body 122, and the inner end of the diaphragm is fixed to the proportional valve core 112. In a radially outward direction from a center axis of the diaphragm 127, the diaphragm 127 is formed as a bent arch. When the proportional valve core component 11 moves downward, it drives the diaphragm 127 to move downward. When a gas pressure in the mounting tube 128 fluctuates, for example, when the gas pressure in the mounting tube 128 is too high, the diaphragm 127 is subjected to pressure from the inside to the outside, causing the diaphragm 127 to bend upward, and the diaphragm 127 drives the proportional valve core component 11 to move upward, reducing a gap between the seal member 111 and the mounting tube 128. As a result, the pressure can be regulated, and the pressure stability of the gas intake can be improved. Moreover, the pressure of the gas entering the burner can be more stable and the gas can be combusted more fully.

In another embodiment of the present disclosure, as shown in FIG. 2, the seal member 111 is fitted over an outer peripheral surface of a lower end of the proportional valve core 112, and an outer peripheral surface of the seal member 111 is a curved surface inclined outwardly and downwardly. The seal member is not easily deformed, a transverse thickness of the seal member is increased, and the gas tightness can be enhanced.

In another embodiment of the present disclosure, as shown in FIG. 2, the proportional valve drive component 10 controls contact and separation between the proportional valve core component 11 and the outlet valve orifice 124 by controlling an up-down movement of the proportional valve core component 11, in which a part of the proportional valve core component 11 is arranged on one side of the outlet valve orifice 124 and another part of the proportional valve core component 11 is arranged on the other side of the outlet valve orifice 124. The seal member 111 stops against the mounting tube 128 of the valve body 12, thereby shutting off the gas supply. The proportional valve drive component 10 may be electromagnetically driven and manually driven; the electromagnetic drive may use an energized coil to generate a magnetic force of a magnetic field for a magnet; and the manual drive may use a rack and pinion mechanism. Preferably, the proportional valve drive component 10 is electromagnetically driven.

Further, as shown in FIG. 2, the proportional valve actuation assembly 10 includes: a permanent magnet 103 arranged above the proportional valve core 112 and fixed to the proportional valve core 112; a valve adjustment coil 102 arranged above the permanent magnet 103; and an iron core 101 embedded within the valve adjustment coil 102. In this embodiment, when the proportional valve core component 1 is turned off, the seal member 111 stops against the mounting tube 128 of the valve body 12, thereby cutting off the gas supply. When in need of gas, the proportional valve core component 1 is turned on, and at this time, the valve adjustment coil 102 located above the permanent magnet 103 is energized and generates a magnetic field, so that the iron core 101 located within the valve adjustment coil 102 becomes magnetic. The iron core 101 is configured to have the same polarity as the permanent magnet 103, and the iron core 101 and the permanent magnet 103 are mutually repulsive, pushing the permanent magnet 103 downward. Since the permanent magnet 103 and the proportional valve core component 11 are fixed together, the permanent magnet 103 drives the proportional valve core component 11 to move downward, and the seal member 111 gets away from the mounting tube 128, in which case the gap is formed between the seal member 111 and the mounting tube 128, and the gas enters the connection cavity 125 from the plug valve gas outlet 3 through the gap between the seal member 111 and the mounting tube 128. The amount of the gas intake is controlled by controlling a size of the gap through adjustment on a current level of the valve adjustment coil 102. For example, when the passage capacity of the gas needs to be increased, it is sufficient to raise the current level of the valve adjustment coil 102.

Embodiments of another aspect of the present disclosure provide a gas appliance including a burner and the gas valve as described above. The burner includes an inner-ring gas channel and an outer-ring gas channel. There is one plug valve gas outlet 4, and correspondingly one group of the gas outlet holes 212 is arranged on the plug valve core 21. The plug valve gas outlet 4 is in communication with the outer-ring gas channel, and the first proportional valve gas outlet 5 is in communication with the inner-ring gas channel. Since the passage of the gas or the amount of the gas intake at the plug valve gas outlet 4 and the first proportional valve gas outlet 5 can be controlled separately by the gas valve, the combustion flame of the inner-ring gas channel and the combustion flame of the outer-ring gas channel can be equally large or small, or can be independently controlled, which enriches the application scenarios and achieves on-demand adjustment.

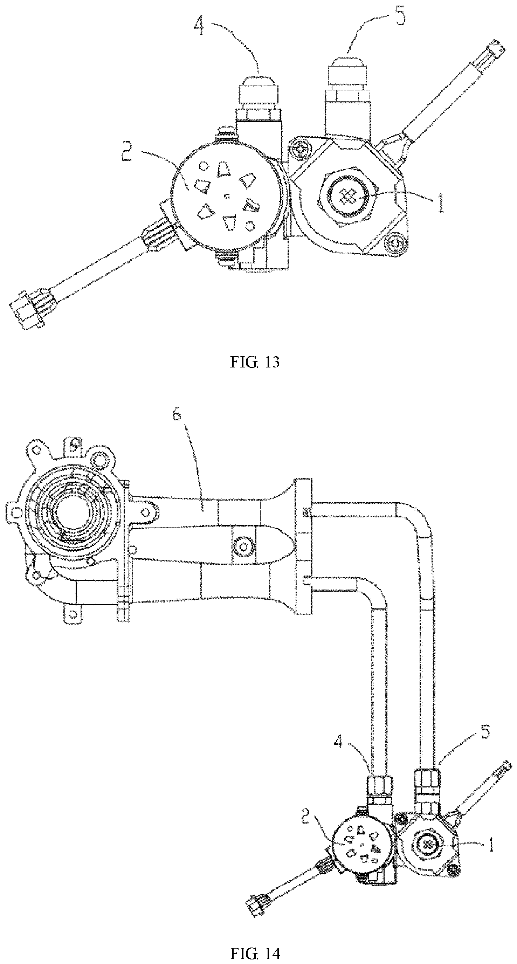

It should be noted that, combined with FIG. 1 and FIG. 13, the plug valve may be located on a left side or a right side of the proportional valve. That is, the plug valve may be located on the left side of the proportional valve, and the proportional valve is located on a right side of the plug valve, when viewed facing the first plug valve gas inlet 3; alternatively, the proportional valve may be located on a left side of the plug valve, and the plug valve is located on the right side of the proportional valve, when viewed facing the first plug valve gas inlet 3. The two reversed structures may be fit with a burner head, and internal configurations and pipeline routes of the two structures are the same, which can refer to FIGS. 1 to 6, and will not be repeated here.

In one embodiment, as shown in FIG. 14, the plug valve is located on the left side of the proportional valve and the proportional valve is located on the right side of the plug valve. Since an ordinary burner head 6 is designed with an inner-ring gas channel in the center and an outer-ring gas channel on the left side, gas distribution pipes coupled between the valve body and the burner head do not have to be crossed when the whole machine is assembled based on the structure of this embodiment, so that the length of the gas pipes can be minimized, and the assembly can be facilitated. In the case of a gas valve structure with the plug valve on the left and the proportional valve on the right, the gas distribution pipes need to be crossed. The relative positions of the plug valve and the proportional valve can be set by a person skilled in the art according to actual needs, which will not be limited here.

Embodiments of another aspect of the present disclosure provide a gas appliance including a burner and the gas valve as described above. The burner includes an inner-ring gas channel, a middle-ring gas channel, and an outer-ring gas channel. There are two plug valve gas outlets 4, and correspondingly two groups of the gas outlet holes 212 are arranged on the plug valve core 21. One of the two plug valve gas outlets is in communication with the middle-ring gas channel, and the other thereof is in communication with the outer-ring gas channel. The first proportional valve gas outlet 5 is in communication with the inner-ring gas channel. Since the passage of the gas or the amount of the gas intake at the plug valve gas outlets 4 and the first proportional valve gas outlet 5 can be controlled separately by the gas valve, the combustion flame of the inner-ring gas channel, the combustion flame of the middle-ring gas channel, and the combustion flame of the outer-ring gas channel can be equally large or small, or can be independently controlled, which enriches the application scenarios and achieves on-demand adjustment.

It should be understood that terms used in the description of the present disclosure are only for the purpose of describing specific embodiments, and are not intended to limit the present disclosure. The terms "a" "an" and "the" in singular forms mean including plural forms, unless clearly indicated in the context otherwise. Terms "comprising," "containing," "including" and "having" are inclusive and specify the presence of stated features, steps, operations, elements and/or components, but do not exclude the presence or addition of one or more other features, steps, operations, elements, components and/or combination thereof. The method steps, processes, and operations described here shall not be construed as necessarily requiring that they be performed in a particular sequence described or illustrated here, unless the sequence for performance is expressly indicated. It should also be understood that additional or alternative steps may be used.

It should be noted that directional terms involved in embodiments of the present disclosure (such as up, down, left, right, front, rear etc.) are used only to explain relative positions or movement between the components in a particular posture (as shown in the drawings), and if the particular posture is changed, the directional terms change accordingly.

In addition, terms such as "first" and "second" involved in embodiments of the present disclosure are only for purposes of description and are not intended to indicate or imply relative importance or significance or to imply the number of indicated technical features. Thus, the feature defined with "first" and "second" may include one or more of this feature. Moreover, technical solutions of various embodiments may be combined with each other, on the premise that they can be realized by a person skilled in the art. When technical solutions are contradictory or unrealizable, it shall be considered that the combination of the technical solutions neither exists nor falls into the protection scope of the present disclosure.

Only preferred specific embodiments of the present disclosure are discussed above, but the protection scope of the present disclosure is not limited thereto. Any changes or substitutions that can be easily thought of by a person skilled in the art within the technical scope revealed by the present disclosure shall be covered by the protection scope of the present disclosure. Therefore, the protection scope of the present disclosure shall be subject to the protection scope of the claims.

## Claims

1. A gas valve, comprising:
a plug valve, having a first plug valve gas inlet (3), a second plug valve gas inlet, a plug valve connection port, and at least one plug valve gas outlet (4), and configured to assume a closed position where the first plug valve gas inlet (3) is obstructed from the plug valve connection port, a first open position where the first plug valve gas inlet (3) is in communication with the plug valve connection port, and a second open position where the first plug valve gas inlet (3) is in communication with the plug valve connection port and the second plug valve gas inlet is in communication with the at least one plug valve gas outlet (4);
a proportional valve, having a proportional valve gas inlet, a first proportional valve gas outlet (5), and a second proportional valve gas outlet, and configured to assume a closed position where the proportional valve gas inlet is obstructed from the first proportional valve gas outlet (5) and the second proportional valve gas outlet, and an open position where the proportional valve gas inlet is in communication with the first proportional valve gas outlet (5) and the second proportional valve gas outlet,
wherein the plug valve connection port is only in direct communication with the proportional valve gas inlet, and the second proportional valve gas outlet is only in direct communication with the second plug valve gas inlet;
wherein the proportional valve and the plug valve have an integrally formed valve body (12), and the plug valve connection port and the proportional valve gas inlet form an integrally formed connection hole (129) in the valve body (12); and
wherein the second proportional valve gas outlet and the second plug valve gas inlet form an integrally arranged connection cavity (125) within the valve body (12), and the first proportional valve gas outlet (5) is in communication with the connection cavity (125).

2. The gas valve according to claim 1, comprising:
the valve body (12), comprising an accommodation cavity (22) in communication with the first plug valve gas inlet (3), the connection hole (129), the connection cavity (125), and the plug valve gas outlet (4); and
a plug valve core assembly comprising:
a plug valve core component comprising a plug valve core (21) rotatably arranged in the accommodation cavity (22), the plug valve core (21) comprising:
a gas inlet hole (213) arranged corresponding to the first plug valve gas inlet (3) and the connection hole (129),
a gas inlet passage (211) in communication with the connection cavity (125), and
at least one group of gas outlet holes (212) arranged corresponding to the at least one plug valve gas outlet (4); and
a plug valve drive component,
wherein the plug valve core component is configured to assume a closed position where the first plug valve gas inlet (3) is obstructed from the connection hole (129), a first open position where the first plug valve gas inlet (3) is in communication with the connection hole (129) through the gas inlet hole (213), and a second open position where the first plug valve gas inlet (3) is in communication with the connection hole (129) through the gas inlet hole (213) and the gas inlet passage (211) is in communication with a corresponding one of the at least one plug valve gas outlet (4) through the at least one group of gas outlet holes (212); and
the plug valve drive component is configured to drive the plug valve core component to rotate among the closed position, the first open position, and the second open position.

3. The gas valve according to claim 2, wherein the plug valve core (21) and the accommodation cavity (22) have inverted truncated conical shapes that match each other, and the plug valve core (21) in the inverted truncated conical shape is hollow to form the gas inlet passage (211).

4. The gas valve according to claim 3, wherein the plug valve core (21) has two groups of gas outlets, each group of gas outlets includes at least one gas outlet, and the two groups of gas outlets are on a common circumference or different circumferences of a side wall of the inverted truncated cone.

5. The gas valve according to any one of claims 2 to 4, wherein the plug valve drive component comprises a stepper motor transmissively coupled to the plug valve core (21).

6. The gas valve according to any one of claims 2 to 4, wherein:
a partial hole section of the gas inlet hole (213) overlaps with the gas outlet holes (212) in an axial direction of the plug valve core (21);
a hole diameter of the partial hole section is smaller than a hole diameter of the remaining hole section of the gas inlet hole (213), and a center of the partial hole section and a center of the remaining hole section are on a common circumference of a side wall of the plug valve core (21).

7. The gas valve according to claim 6, wherein the hole diameter gradually increases from the partial hole section to the remaining hole section.

8. A gas appliance comprising:
the gas valve according to any one of claims 1-3 and 5-7; and
a burner comprising an inner-ring gas channel and an outer-ring gas channel,
wherein there is one plug valve gas outlet (4), and correspondingly one group of gas outlet holes (212) is arranged on the plug valve core (21); the plug valve gas outlet (4) is in communication with the outer-ring gas channel, and the first proportional valve gas outlet (5) is in communication with the inner-ring gas channel.

9. A gas appliance comprising:
the gas valve according to claim 4; and
a burner comprising an inner-ring gas channel, a middle-ring gas channel, and an outer-ring gas channel,
wherein there are two plug valve gas outlets (4), and correspondingly two groups of the gas outlet holes (212) are arranged on the plug valve core (21); one of the two plug valve gas outlets (4) is in communication with the middle-ring gas channel, and the other of the two plug valve gas outlets (4) is in communication with the outer-ring gas channel; the first proportional valve gas outlet (5) is in communication with the inner-ring gas channel.

## Patentansprüche

1. Gasventil, umfassend:
ein Kegelventil, das einen ersten Kegelventil-Gaseinlass (3) einen zweiten Kegelventil-Gaseinlass, einen Kegelventil-Verbindungsanschluss und mindestens einen Kegelventil-Gasauslass (4) aufweist und dafür gestaltet ist, eine geschlossene Position, in der der erste Kegelventil-Gaseinlass (3) zu dem Kegelventil-Verbindungsanschluss gesperrt ist, eine erste geöffnete Position, in der der erste Kegelventil-Gaseinlass (3) in Verbindung mit dem Kegelventil-Verbindungsanschluss steht, und eine zweite geöffnete Position einzunehmen, in der der erste Kegelventil-Gaseinlass (3) in Verbindung mit dem Kegelventil-Verbindungsanschluss steht und der zweite Kegelventil-Gaseinlass in Verbindung mit dem mindestens einen Kegelventil-Gasauslass (4) steht,
ein Proportionalventil, das einen Proportionalventil-Gaseinlass, einen ersten Proportionalventil-Gasauslass (5) und einen zweiten Proportionalventil-Gasauslass aufweist und dafür gestaltet ist, eine geschlossene Position, in der der Proportionalventil-Gaseinlass zu dem ersten Proportionalventil-Gasauslass (5) und dem zweiten Proportionalventil-Gasauslass gesperrt ist, und eine geöffnete Position einzunehmen, in der der Proportionalventil-Gaseinlass in Verbindung mit dem ersten Proportionalventil-Gasauslass (5) und dem zweiten Proportionalventil-Gasauslass steht,
wobei der Kegelventil-Verbindungsanschluss nur mit dem Proportionalventil-Gaseinlass in direkter Verbindung steht und der zweite Proportionalventil-Gasauslass nur mit dem zweiten Kegelventil-Gaseinlass in direkter Verbindung steht,
wobei das Proportionalventil und das Kegelventil einen einstückig gebildeten Ventilkörper (12) aufweisen und der Kegelventil-Verbindungsanschluss und der Proportionalventil-Gaseinlass eine einstückig gebildete Verbindungsöffnung (129) in dem Ventilkörper (12) bilden und
wobei der zweite Proportionalventil-Gasauslass und der zweite Kegelventil-Gaseinlass einen eintückig angeordneten Verbindungshohlraum (125) in dem Ventilkörper (12) bilden und der erste Proportionalventil-Gasauslass (5) in Verbindung mit dem Verbindungshohlraum (125) steht.

2. Gasventil nach Anspruch 1, umfassend:
den Ventilkörper (12), der einen Unterbringungshohlraum (22) in Verbindung mit dem ersten Kegelventil-Gaseinlass (3), der Verbindungsöffnung (129), dem Verbindungshohlraum (125) und dem Kegelventil-Gasauslass (4) umfasst, und
eine Kegelventil-Kernanordnung, die Folgendes umfasst:
eine Kegelventil-Kernkomponente, die einen Kegelventilkern (21) umfasst, der drehbar in dem Unterbringungshohlraum (22) angeordnet ist, wobei der Kegelventilkern (21) Folgendes umfasst:
eine Gaseinlassöffnung (213), die übereinstimmend mit dem ersten Kegelventil-Gaseinlass (3) und der Verbindungsöffnung (129) angeordnet ist,
einen Gaseinlassdurchgang (211) in Verbindung mit dem Verbindungshohlraum (125) und
mindestens eine Gruppe von Gasauslassöffnungen (212), die übereinstimmend mit dem mindestens einen Kegelventil-Gasauslass (4) angeordnet ist, und
eine Kegelventil-Antriebskomponente,
wobei die Kegelventil-Kernkomponente dafür gestaltet ist, eine geschlossene Position, in der der erste Kegelventil-Gaseinlass (3) zu der Verbindungsöffnung (129) gesperrt ist, eine erste geöffnete Position, in der der erste Kegelventil-Gaseinlass (3) durch die Gaseinlassöffnung (213) in Verbindung mit der Verbindungsöffnung (129) steht, und eine zweite geöffnete Position einzunehmen, in der der erste Kegelventil-Gaseinlass (3) durch die Gaseinlassöffnung (213) in Verbindung mit der Verbindungsöffnung (129) steht und der Gaseinlassdurchgang (211) durch die mindestens eine Gruppe von Gasauslassöffnungen (212) in Verbindung mit einem übereinstimmenden des mindestens einen Kegelventil-Gasauslasses (4) steht, und
die Kegelventil-Antriebskomponente dafür gestaltet ist, die Kegelventil-Kernkomponente zur Drehung in die geschlossene Position, die erste geöffnete Position und die zweite geöffnete Position anzutreiben.

3. Gasventil nach Anspruch 2, wobei der Kegelventilkern (21) und der Unterbringungshohlraum (22) umgekehrte Kegelstumpfformen aufweisen, die zueinander passen, und der Kegelventilkern (21) in der umgekehrten Kegelstumpfform hohl ist, um den Gaseinlassdurchgang (211) zu bilden.

4. Gasventil nach Anspruch 3, wobei der Kegelventilkern (21) zwei Gruppen von Gasauslässen aufweist, wobei jede Gruppe von Gasauslässen mindestens einen Gasauslass beinhaltet und sich die zwei Gruppen von Gasauslässen auf einem gemeinsamen Umfang oder verschiedenen Umfängen einer Seitenwand des umgekehrten Kegelstumpfs befinden.

5. Gasventil nach einem der Ansprüche 2 bis 4, wobei die Kegelventil-Antriebskomponente einen Schrittmotor umfasst, der übertragungsfähig mit dem Kegelventilkern (21) gekoppelt ist.

6. Gasventil nach einem der Ansprüche 2 bis 4, wobei:
ein Öffnungsteilabschnitt der Gaseinlassöffnung (213) die Gasauslassöffnungen (212) in einer axialen Richtung des Kegelventilkerns (21) überlappt,
ein Öffnungsdurchmesser der Öffnungsteilabschnitts kleiner als ein Öffnungsdurchmesser des verbleibenden Öffnungsabschnitts der Gaseinlassöffnung (213) ist und eine Mitte des Öffnungsteilabschnitts und eine Mitte des verbleibenden Öffnungsabschnitts auf einem gemeinsamen Umfang einer Seitenwand des Kegelventilkerns (21) liegen.

7. Gasventil nach Anspruch 6, wobei der Öffnungsdurchmesser von dem Öffnungsteilabschnitt zu dem verbleibenden Öffnungsabschnitt schrittweise zunimmt.

8. Gasgerät, umfassend:
das Gasventil nach einem der Ansprüche 1-3 und 5-7 und
einen Brenner, der einen Innenring-Gaskanal und einen Außenring-Gaskanal umfasst,
wobei an dem Kegelventilkern (21) ein Kegelventil-Gasauslass (4) und übereinstimmend eine Gruppe von Gasauslassöffnungen (212) angeordnet sind, der Kegelventil-Gasauslass (4) in Verbindung mit dem Außenring-Gaskanal steht und der erste Proportionalventil-Gasauslass (5) in Verbindung mit dem Innenring-Gaskanal steht.

9. Gasgerät, umfassend:
das Gasventil nach Anspruch 4 und
einen Brenner, der einen Innenring-Gaskanal, einen Mittelring-Gaskanal und einen Außenring-Gaskanal umfasst,
wobei an dem Kegelventilkern (21) zwei Kegelventil-Gasauslässe (4) und übereinstimmend zwei Gruppen von Gasauslassöffnungen (212) angeordnet sind, einer der zwei Kegelventil-Gasauslässe (4) in Verbindung mit dem Mittelring-Gaskanal steht und der andere der zwei Kegelventil-Gasauslässe (4) in Verbindung mit dem Außenring-Gaskanal steht, der erste Proportionalventil-Gasauslass (5) in Verbindung mit dem Innenring-Gaskanal steht.

## Revendications

1. Robinet de gaz, comportant :
un robinet à tournant, ayant une première entrée de gaz de robinet à tournant (3), une deuxième entrée de gaz de robinet à tournant, un orifice de raccordement de robinet à tournant et au moins une sortie de gaz de robinet à tournant (4), et configuré pour prendre une position fermée dans laquelle la première entrée de gaz de robinet à tournant (3) est obstruée par rapport à l'orifice de raccordement de robinet à tournant, une première position ouverte dans laquelle la première entrée de gaz de robinet à tournant (3) est en communication avec l'orifice de raccordement de robinet à tournant, et une deuxième position ouverte dans laquelle la première entrée de gaz de robinet à tournant (3) est en communication avec l'orifice de raccordement de robinet à tournant et la deuxième entrée de gaz de robinet à tournant est en communication avec ladite au moins une sortie de gaz de robinet à tournant (4) ;
un robinet à action proportionnelle, ayant une entrée de gaz de robinet à action proportionnelle, une première sortie de gaz de robinet à action proportionnelle (5) et une deuxième sortie de gaz de robinet à action proportionnelle, et configuré pour prendre une position fermée dans laquelle l'entrée de gaz de robinet à action proportionnelle est obstruée par rapport à la première sortie de gaz de robinet à action proportionnelle (5) et à la deuxième sortie de gaz de robinet à action proportionnelle, et une position ouverte dans laquelle l'entrée de gaz de robinet à action proportionnelle est en communication avec la première sortie de gaz de robinet à action proportionnelle (5) et avec la deuxième sortie de gaz de robinet à action proportionnelle,
dans lequel l'orifice de raccordement de robinet à tournant est en communication directe uniquement avec l'entrée de gaz de robinet à action proportionnelle, et la deuxième sortie de gaz de robinet à action proportionnelle est en communication directe uniquement avec la deuxième entrée de gaz de robinet à tournant ;
dans lequel le robinet à action proportionnelle et le robinet à tournant ont un corps de robinet (12) formé d'un seul tenant, et l'orifice de raccordement de robinet à tournant et l'entrée de gaz de robinet à action proportionnelle forment un trou de raccordement (129) formé d'un seul tenant dans le corps de robinet (12) ; et
dans lequel la deuxième sortie de gaz de robinet à action proportionnelle et la deuxième entrée de gaz de robinet à tournant forment une cavité de raccordement (125) agencée d'un seul tenant dans le corps de robinet (12), et la première sortie de gaz de robinet à action proportionnelle (5) est en communication avec la cavité de raccordement (125).

2. Robinet de gaz selon la revendication 1, comportant :
le corps de robinet (12) comportant une cavité de réception (22) en communication avec la première entrée de gaz de robinet à tournant (3), le trou de raccordement (129), la cavité de raccordement (125) et la sortie de gaz de robinet à tournant (4) ; et
un ensemble formant intérieur de robinet à tournant comportant :
un composant d'intérieur de robinet à tournant comportant un intérieur de robinet à tournant (21) agencé de manière rotative dans la cavité de réception (22), l'intérieur de robinet à tournant (21) comportant :
un trou d'entrée de gaz (213) agencé de manière à correspondre à la première entrée de gaz de robinet à tournant (3) et au trou de raccordement (129),
un passage d'entrée de gaz (211) en communication avec la cavité de raccordement (125), et
au moins un groupe de trous de sortie de gaz (212) agencés de manière à correspondre à ladite au moins une sortie de gaz de robinet à tournant (4) ; et
un composant d'entraînement de robinet à tournant,
dans lequel le composant d'intérieur de robinet à tournant est configuré pour prendre une position fermée dans laquelle la première entrée de gaz de robinet à tournant (3) est obstruée par rapport au trou de raccordement (129), une première position ouverte dans laquelle la première entrée de gaz de robinet à tournant (3) est en communication avec le trou de raccordement (129) au travers du trou d'entrée de gaz (213), et une deuxième position ouverte dans laquelle la première entrée de gaz de robinet à tournant (3) est en communication avec le trou de raccordement (129) au travers du trou d'entrée de gaz (213) et le passage d'entrée de gaz (211) est en communication avec un élément correspondant parmi ladite au moins une sortie de gaz de robinet à tournant (4) au travers dudit au moins un groupe de trous de sortie de gaz (212) ; et
le composant d'entraînement de robinet à tournant est configuré pour entraîner le composant d'intérieur de robinet à tournant à des fins de rotation entre la position fermée, la première position ouverte et la deuxième position ouverte.

3. Robinet de gaz selon la revendication 2, dans lequel l'intérieur de robinet à tournant (21) et la cavité de réception (22) ont des formes tronconiques inversées qui se correspondent l'une à l'autre, et l'intérieur de robinet à tournant (21) dans la forme tronconique inversée est creux pour former le passage d'entrée de gaz (211).

4. Robinet de gaz selon la revendication 3, dans lequel l'intérieur de robinet à tournant (21) a deux groupes de sorties de gaz, chaque groupe de sorties de gaz comprend au moins une sortie de gaz, et les deux groupes de sorties de gaz se trouvent sur une circonférence commune ou sur des circonférences différentes d'une paroi latérale du cône tronqué inversé.

5. Robinet de gaz selon l'une quelconque des revendications 2 à 4, dans lequel le composant d'entraînement de robinet à tournant comporte un moteur pas-à-pas couplé de manière transmissive à l'intérieur de robinet à tournant (21).

6. Robinet de gaz selon l'une quelconque des revendications 2 à 4, dans lequel :
une section de trou partielle du trou d'entrée de gaz (213) chevauche les trous de sortie de gaz (212) dans un sens axial de l'intérieur de robinet à tournant (21) ;
un diamètre de trou de la section de trou partielle est inférieur à un diamètre de trou de la section de trou restante du trou d'entrée de gaz (213), et un centre de la section de trou partielle et un centre de la section de trou restante se trouvent sur une circonférence commune d'une paroi latérale de l'intérieur de robinet à tournant (21).

7. Robinet de gaz selon la revendication 6, dans lequel le diamètre de trou va progressivement en augmentant de la section de trou partielle à la section de trou restante.

8. Appareil à gaz comportant :
le robinet de gaz selon l'une quelconque des revendications 1 à 3 et 5 à 7 ; et
un brûleur comportant un canal de gaz à anneau intérieur et un canal de gaz à anneau extérieur,
dans lequel il y a une sortie de gaz de robinet à tournant (4) et, de manière correspondante, un groupe de trous de sortie de gaz (212) est agencé sur l'intérieur de robinet à tournant (21) ; la sortie de gaz de robinet à tournant (4) est en communication avec le canal de gaz à anneau extérieur, et la première sortie de gaz de robinet à action proportionnelle (5) est en communication avec le canal de gaz à anneau intérieur.

9. Appareil à gaz comportant :
le robinet de gaz selon la revendication 4 ; et
un brûleur comportant un canal de gaz à anneau intérieur, un canal de gaz à anneau central et un canal de gaz à anneau extérieur,
dans lequel il y a deux sorties de gaz de robinet à tournant (4) et, de manière correspondante, deux groupes de trous de sortie de gaz (212) sont agencés sur l'intérieur de robinet à tournant (21) ; l'une des deux sorties de gaz de robinet à tournant (4) est en communication avec le canal de gaz à anneau central, et l'autre des deux sorties de gaz de robinet à tournant (4) est en communication avec le canal de gaz à anneau extérieur ; la première sortie de gaz de robinet à action proportionnelle (5) est en communication avec le canal de gaz à anneau intérieur.
